# EUROPEAN PATENT APPLICATION

(11) **EP 1 201 822 A1**
(43) Date of publication of application: **02.05.2002**
(21) Application number: 01308775.4
(22) Date of filing: 16.10.2001
(51) Int. Cl.: D21H 27/32, B65D 65/38, B32B 29/00

(54) **Printable paperboard for packaging**

(30) Priority: 23.10.2000 US 242573 P; 14.06.2001 US 881379
(71) Applicant: WESTVACO CORPORATION, New York New York 10171 (US)
(72) Inventor: Babcock, Bruce W., Charleston, SC 29407 (US); Hancock, Louis R., Summerville, SC 29485 (US); Calhoun, Leroy E., Hanahan, SC 29406 (US); LePosa, Rebecca A., Owing Mills, MD 21117 (US)
(74) Representative: Thomson, Paul Anthony

(57) **Abstract**

A printable composite paperboard product exhibiting thicknesses of from 0.66 mm to 1.12 mm (0.026 to 0.044) inches, with corresponding stiffness and compression strength, is disclosed for printable packaging materials of substantial density and compressive strength for products in need of a barrier layer. The invention product is made by a process whereby a thinner bleached (white) paper sheet product is laid atop a thicker unbleached paper product. The topmost sheet layer may be one of a variety of materials including, but not limited to, fine papers and bleached paperboard; whereas, the bottom layer may be one of a variety of materials including, but not limited to, an unbleached folding carton board. Also disclosed is a box formed of the disclosed paperboard product.

## Description

### Field of the Invention

This invention relates to paperboard. Additionally, this invention relates to packaging grade paperboard with a high-quality printing surface. Further, this invention relates to packaging grade paperboard with a high-quality printing surface that exhibits high stiffness. Also, this invention relates to the process for making said packaging grade paperboard.

### Background of the Invention

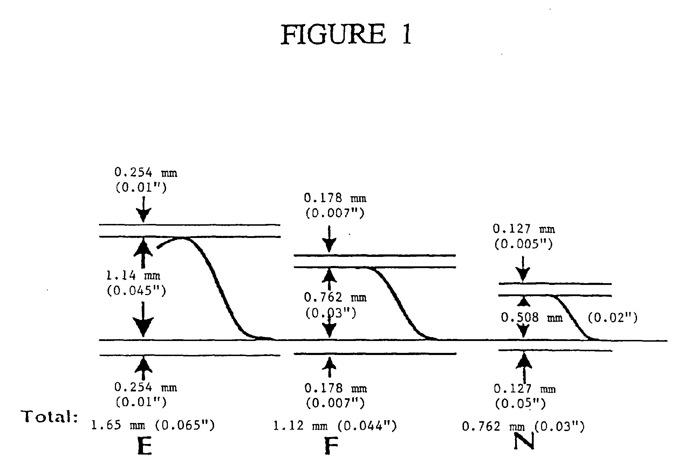

Linerboard is a grade of paperboard used in the production of corrugated container or boxes. It is used in the inner and outer facings (liners) in combination with inner corrugating medium (the fluted inner sheet) to form a rigid structure of the combined corrugated board. These materials are made ("converted") into corrugated boxes for shipping a variety of consumer goods. Corrugated container use has expanded beyond protective packaging for shipping products. Today's retailers may put their boxes in stores, with high quality graphics for point-of-purchase displays. Instead of simply housing a product for transport, the corrugated box has become integral to the "look" of the product, incorporating colors, smaller flutes, and coatings to create a stylish package to improve its marketability and shelf appeal. Figure 1 and Table 1 show the evolution of various flutes in the corrugated packaging market. As the type of packaging the instant invention is intended to replace, the smaller fluted products of the Figure (E, F, and N) may represent the closest art.

Traditionally, boxes were printed with one or two colors using a flexographic printing process on corrugated board, but quality has been limited because of the uneven, wavy surface. Due to the trend toward using corrugated containers as a point of purchase display, the desire for improved graphics increased. Often mottled white or bleached linerboard is used to improve the appearance of flexo printing. In the 1970s, the preprint process was developed. In this process, which has been recently refined, as disclosed in U.S. Patent Nos. 5,882,746 and 6,099,674, linerboard is printed before it is laminated to the corrugated board. This provided higher-resolution printing especially for colors. Clay coatings are also used to provide better graphics in unbleached linerboard. Another alternative is to utilize preprinted clay-coated publication paper and then laminate it onto a brown board though adhesion. Even though all of the various alternatives to achieve better graphics offer some benefits, they still have significant drawbacks, which are summarized below:
(A) Mini and Medium Flute Packaging:
   - only efficient for large volume runs due to extensive set up time;
   - normally not under one Toof - which increases costs and turn around time;
   - visual flute lines degrade visual appeal;
   - production inefficiencies result on printing presses due to:
      - non-uniformity;
      - higher compressibility - flutes get crushed;
      - warp problems - causes high rejects;
      - relatively slow production speeds - 4000-5000 sheets per hour.
(B) Clay-coatings:
   - rough surface of the coated paperboard still does not offer good print surface even after the clay coating;
   - for brown substrate large amount of clay is needed to avoid show through.
(C) Preprint followed by lamination:
   - relatively high waste during processing;
   - production efficiencies are poor and costly for short runs;
   - normally not available under one roof.

The above production and graphic issues relating to existing paper board substrates demonstrate a clear need for a paperboard composite which can overcome these production and graphics inefficiencies and become an attractive package to the whole supply chain including the board manufacturer, converter/printer, and the end user. Packaging grade board with a high-quality printing surface is generally unavailable above a caliper (stiffness) of 0.813 mm (0.032 inches). Moreover, a number of end uses for this type of heavy weight packaging currently require functional barriers such as over wraps or bags inside of boxes (detergent, some foods, hygroscopic chemicals).

### Summary of the Invention

The demands lacking in the existing products are met in the invention provision of a paperboard composite exhibiting thicknesses of from about 0.66 mm to 1.12 mm (0.026 to 0.044 inches), with corresponding stiffness and compression strength. The invention product is made by a process whereby a thinner bleached (white) paper product is adhered atop a thicker unbleached paper product. The topmost sheet may be one of a variety of materials including, but not limited to, fine papers and bleached paperboard; whereas, the bottom sheet may be one of a variety of materials including, but not limited to, an unbleached folding carton board.

Figure 1, which relates to Table 1, shows cross-sections of corrugated boards (E, F, and N), as used in prior art packaging, each formed of an internal fluted sheet layer bound by external layers of linerboard sheets. Upon box formation, one of the external layers becomes the inner facing and the other external layer becomes the outer facing of the corrugated board.

### Detailed Description of the Invention

The invention product is made by bonding a thinner bleached (white), un-printed paper product bonded atop a thicker unbleached paper product. The topmost sheet may be one of a variety of materials including, but not limited to, fine papers and bleached paperboard; whereas, the bottom sheet may be one of a variety of materials including, but not limited to, an unbleached folding carton board. The top layer is made in a fashion whereby it contains a coating on both sides. A non-exhaustive list of coatings that can be used are latex-clay mixtures, polyvinyl alcohol (PVOH), polyvinylidene chloride (PVDC) and acrylic polymers. The top layer caliper may range from about 0.051 mm to 0.305 mm (0.002 to 0.012 inches). The bottom layer is made in a fashion whereby its density may range from 3.63 kg to 4.08 kg/278.7 m² /0.254 mm (8.0 to 9.0 lb/3000 ft²/caliper pt.), and its caliper may range from about 0.635 mm to 0.813 mm (0.025 to 0.032 inches).

The composition production process is accomplished by applying a continuous film of adhesive to one of the sheets and joining (bonding) it with the other sheet via the adhesive film. The adhesive film may be applied to the topmost sheet, and the two sheets then combined by the action of a nip between two cylindrical rollers. One or more of such rollers may be covered with a resilient cover (prefered) or they may be hard metal (e.g., steel) surfaces. The combined board product may be cut into sheets of desired dimensions or wound onto paperboard cores for later converting steps. A non-exhaustive list of examples of laminating adhesives that may be used include, polyvinyl acetate (PVA), PVOH, PVDC, SBR latex, acrylic emulsions, sodium silicate, cooked starch, and extruded polymer films including, low density polyethylene (LDPE), high density polyethylene (HDPE), polyvinylidene chloride (PVDC), nylon, and polypropylene.

The invention paperboard composite offers significant benefits over the currently available boards for similar applications. These benefits are listed below:
- greater press and die-cutting speeds;
- ease of operating under one roof;
- less rejects;
- runs like solid fiber board;
- set up times are not long thus well suited for both small or large volume runs;
- no flute lines
- performs well for embossing, foil stamping, UV coating which are very difficult with conventional corrugated board;
- available in sheets and roll form;
- no warp issues;
- superior performance in refrigeration/freezer applications;
- ability to make invention board with specialty internal barrier properties;
- ability to make invention board with extrusion coatings such as polypropylene, polyester, nylon, PMP, and other specialty resins;

The invention board can be used for packaging in various market segments such as, but not limited to, consumer electronics, liquor and other beverages, food, hardware, sporting goods, personal care, medical devices, pharmaceuticals, etc.

The following examples show the benefits of the invention herein described.

### Examples

These examples compares certain properties of various packaging materials.

The data from Table 2 show relative R-values (thermal transfer) for the invention board and currently available flute-based packaging substrate. It is noted that the invention board as the same caliper showed higher (i.e., better) R-values compared to the same caliper existing board.

Table 3 shows a comparison with invention paperboard (samples B, C, and D) compressive strength properties versus those of a commercial packaging material (sample A).

The data from Table 3 show generally comparable or improved compression strengths achieved with the invention paperboard laminates at lower calipers as compared to the existing board.

Further examples of the invention board are shown in Table 4. Specifically, Table 4 shows further comparison with existing packaging paperboard.

The data of Table 4 show that the invention paperboard laminate achieves acceptable 4 point bending stiffness and improved z-direction tensile strength and compression (block and panel) at significantly reduced caliper.

While the invention has been described above with reference to specific embodiments thereof, it will be apparent to skilled persons that minor changes, modifications, and variations may be made to the details of the invention described herein without departing from the underlying principles of the inventive concept disclosed, including various obvious substitutions, such as substitute pH-modifying acids and/or bases. Nevertheless, the subject matter of the invention is within the bounds of the claims.

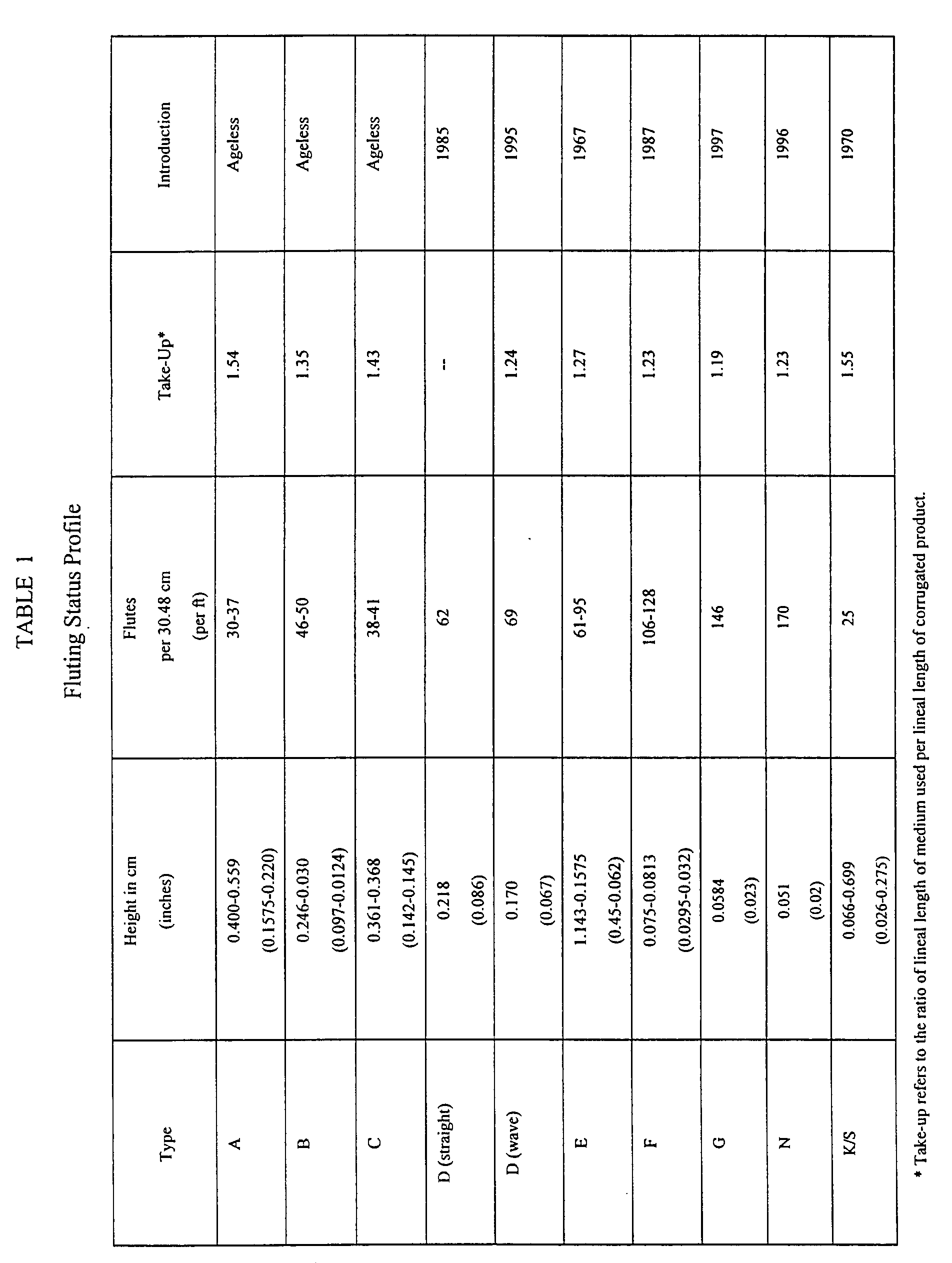

**TABLE 2**

| Comparison of Various Materials | | | | |
|---|---|---|---|---|
| Printed Package | Caliper cm (in) | R-value (caliper/k) (hr.fi².°F/Btu) | Thermal Conductivity | |
| | | | Btu/hr.ft.°F | W/m.°C |
| Invention board | 0.096 (0.0376) | 0.0730 | 0.0429 | 0.0742 |
| Miniflute | 0.096 (0.0376) | 0.0719 | 0.0436 | 0.0754 |

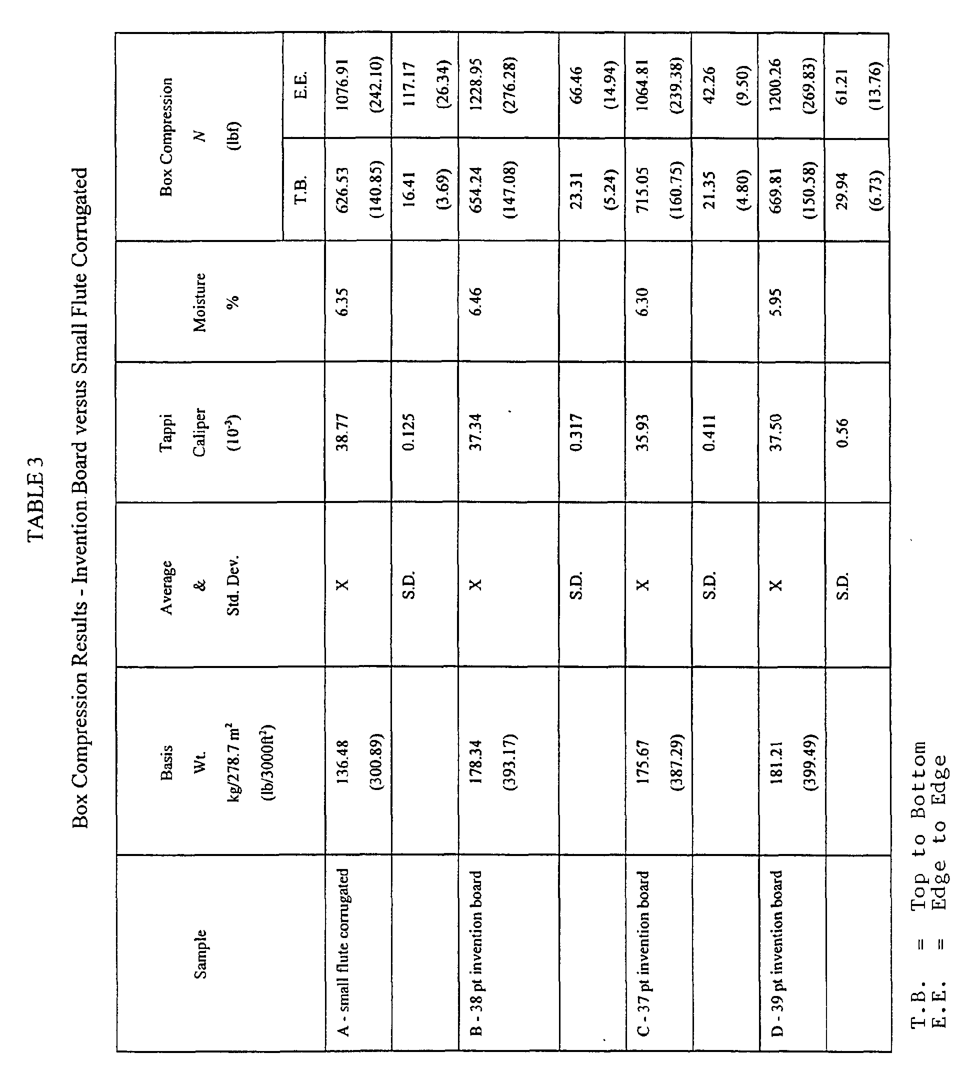

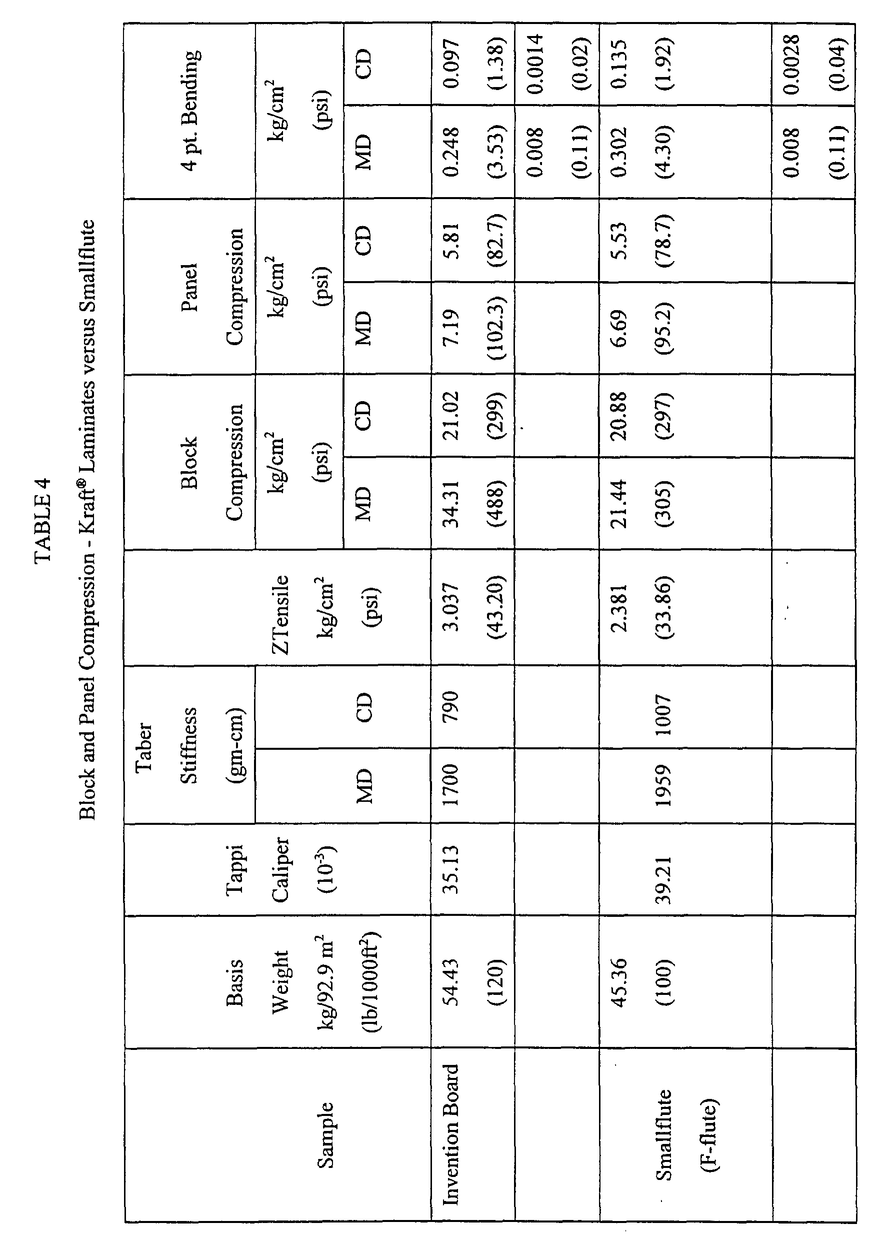

## Claims

1. A process for making a paperboard composite comprising a topmost paperboard layer, an adhesive material, and a bottom paperboard layer comprising the steps of:
(a) applying a continuous film of the adhesive material to cover a face surface of a paperboard layer selected from the topmost paperboard layer and the bottom paperboard layer; and
(b) bonding the topmost layer with the bottom layer wherein said layers are aligned so the continuous film of the adhesive material resides between a face surface of each of said layers.

2. The process of claim 1 wherein the topmost paperboard layer is thinner than the bottom paperboard layer and the continuous film of adhesive material is applied to said topmost paperboard layer in step (a).

3. The process of claim 2 wherein the topmost paperboard layer is selected from a fine paper and a bleached paperboard and the bottom paperboard layer is an unbleached folding carton board.

4. The process of claim 3 wherein the adhesive material is selected from polyvinyl acetate (PVA), polyvinyl alcohol (PVOH), SBR latex, acrylic emulsions, sodium silicate, cooked starch, and extruded polymer films including, low density polyethylene (LDPE), high density polyethylene (HDPE), polyvinylidene dichromate (PVDC), nylon, and polypropylene.

5. The product of the process of claim 1.

6. A box formed from the product of claim 5

7. A laminated paperboard comprising a thinner topmost paperboard layer, an adhesive material, and a thicker bottom paperboard layer wherein the adhesive material is situated between and in contact with both the thinner topmost paperboard layer and the thicker bottom paperboard layer.

8. A box formed of the laminated paperboard of claim 7.

9. The process of claim 2 wherein the thinner topmost paperboard layer is unprinted.

10. The process of claim 9 wherein the thinner topmost paperboard layer is **characterized by** a thickness of 0.0508 mm to 0.305 mm.

11. The process of claim 2 wherein the bottom paperboard layer is unprinted.

12. The process of claim 11 wherein the bottom paperboard layer is **characterized by** a thickness of 0.635 mm to 0.813 mm.
